# EUROPÄISCHE PATENTSCHRIFT

(11) **EP 3 592 475 B1**
(45) Veröffentlichungstag und Bekanntmachung des Hinweises auf die Patenterteilung: **05.05.2021**
(21) Anmeldenummer: 18704964.8
(22) Anmeldetag: 09.02.2018
(51) Int. Cl.: B07B 7/083, B01D 45/14, B02C 23/32, B07B 9/02

(54) **SICHTEINRICHTUNG UND VERFAHREN ZUM SICHTEN EINES MATERIALSTROMS**
CLASSIFYING DEVICE AND METHOD FOR CLASSIFYING A MATERIAL FLOW
DISPOSITIF DE SÉPARATION ET PROCÉDÉ DESTINÉ À SÉPARER UN FLUX DE MATÉRIAUX

(30) Priorität: 08.03.2017 DE 102017203812
(43) Veröffentlichungstag der Anmeldung: 15.01.2020
(73) Patentinhaber: thyssenkrupp Industrial Solutions AG, 45143 Essen (DE); thyssenkrupp AG, 45143 Essen (DE)
(72) Erfinder: MELIES, Karsten, 33332 Gütersloh (DE); RÜTHER, Thomas, 48317 Drensteinfurt (DE); KACHE, Guido, 59269 Beckum (DE); WUWER, Matthias, 59510 Lippetal (DE)
(74) Vertreter: thyssenkrupp Intellectual Property GmbH
(86) Internationale Anmeldenummer: PCT/EP2018/053312
(87) Internationale Veröffentlichungsnummer: WO 2018/162173

(56) Entgegenhaltungen:
- EP-A2- 1 004 366
- WO-A1-2008/086026
- US-A- 2 973 094

## Beschreibung

Die Erfindung betrifft eine Sichteinrichtung sowie ein Verfahren zum Sichten eines körnigen Materialstroms.

Der Anteil von Klinker als Hauptbestandteil von Zementen wird mit Blick auf die bei der Klinkerherstellung freigesetzten CO2-Emissionen durch alternative Zementkomponenten wie Hüttensand, Flugasche oder Kalkstein seit einigen Jahren stetig verringert. Moderne Hochleistungszemente zeichnen sich zusätzlich durch eine definierte Partikelgrößenverteilung mit einem eng abgegrenzten Kornband (beispielsweise Mono-Korn) aus, wobei sehr hohe Anforderungen an die Feinheit und die Homogenität des Zements gestellt werden.

Eine solche Sichteinrichtung ist bisher aus der US 2 973 094 A bekannt. Die US 2 973 094 A offenbart eine Sichteinrichtung gemäß dem Oberbegriff des Anspruchs 1, wobei zwei Sichtstufen auf dem gleichen Höhenniveau angeordnet sind. Auch aus der WO 2008/086026 A1 ist eine Sichteinrichtung bekannt, die lediglich eine Sichtstufe aufweist. Eine weitere Ausführung einer zweistufigen Sichteinrichtung ist in der EP 1 004 366 A2 offenbart.

Zur Verbesserung der Trennschärfe ist es beispielsweise aus der DD241869A1 bekannt, zwei Rotorkörbe zu verwenden. Dies führt allerdings nicht zu der gewünschten Partikelgrößenverteilung oder einem eng abgegrenzten Kornband.

Es ist daher Aufgabe der vorliegenden Erfindung, eine Sichteinrichtung und ein Verfahren zum Sichten eines Materialstroms bereitzustellen mit dem ein Material mit einer definierten Partikelgrößenverteilung und einem abgegrenzten Kornband herstellbar ist.

Diese Aufgabe wird erfindungsgemäß durch eine Sichteinrichtung mit den Merkmalen des unabhängigen Vorrichtungsanspruchs 1 und durch ein Verfahren mit den Merkmalen des unabhängigen Verfahrensanspruchs 10 gelöst. Vorteilhafte Weiterbildungen ergeben sich aus den abhängigen Ansprüchen.

Eine Sichteinrichtung zum Sichten eines körnigen Materialstroms umfasst nach einem ersten Aspekt eine erste Sichtstufe und eine zweite Sichtstufe, wobei jede Sichtstufe jeweils einen Materialeinlass zum Einlassen von Sichtgut in die jeweilige Sichtstufe, einen um seine vertikal ausgerichtete Längsachse rotierbaren Rotorkorb, einen Grobgutauslass zum Auslassen des Grobguts aus der jeweiligen Sichtstufe und einen Feingutauslass zum Auslassen des Feinguts aus der jeweiligen Sichtstufe aufweist. Der Feingutauslass der ersten Sichtstufe steht mit der zweiten Sichtstufe in Verbindung, sodass Feingut der ersten Sichtstufe der zweiten Sichtstufe zugeführt wird wobei die zweite Sichtstufe vollständig unterhalb der ersten Sichtstufe angeordnet ist.

Insbesondere weist zumindest eine der Sichtstufen einen Sichtlufteinlass auf, durch den ein Sichtluftvolumenstrom in die erste und/ oder die zweite Sichtstufe strömt. Der Sichtlufteinlass umfasst vorzugsweise Klappen, um den Sichtluftvolumenstrom in Richtung des Rotorkorbes einzustellen. Zur Erzeugung des Sichtluftvolumenstroms weist die Sichteinrichtung einen oder mehrere Ventilatoren auf. Durch die Ventilatoren wird ein leichter Unterdruck in der Sichteinrichtung erzeugt, um Staubaustritt zu minimieren. Um den Rotorkorb der ersten und der zweiten Sichtstufe ist vorzugsweise jeweils umfangsmäßig eine Leiteinrichtung mit einer Mehrzahl von Leitelementen, wie beispielsweise Leitschaufeln angeordnet. Die Leiteinrichtung dient der Ausrichtung des Sichtluftstroms in Richtung des jeweiligen Rotorkorbes, wobei der Sichtluftstrom zumindest teilweise in Umfangsrichtung und/ oder in radialer Richtung des Rotorkorbes ausgerichtet wird. Jede der Sichtstufen weist insbesondere einen zwischen der Leiteinrichtung und dem Rotor ausgebildeten Sichtraum auf, in den das zu sichtenden Material aufgegeben wird.

Der Feingutauslass der ersten Sichtstufe ist beispielsweise direkt mit der zweiten Sichtstufe, insbesondere mit einem Materialeinlass der zweiten Sichtstufe verbunden. Insbesondere wird ausschließlich das Feingut der ersten Stufe und nicht das Grobgut der zweiten Sichtstufe zugeführt. Das Grobgut der ersten Sichtstufe wird vorzugsweise aus der Sichteinrichtung abgeführt.

Der Materialeinlass der ersten Sichtstufe umfasst beispielsweise eine Materialrutsche und/ oder einen Streuteller oberhalb des Rotorkorbes der ersten Sichtstufe, wobei der Streuteller vorzugsweise einen Durchmesser aufweist, der in etwa dem Durchmesser des Rotorkorbes entspricht. Die Sichteinrichtung weist vorzugweise zumindest eine Antriebswelle auf, die sich entlang der Längsachse zumindest eines Rotorkorbes erstreckt und fest mit dem zumindest einen Rotorkorb verbunden ist. Die Antriebswelle wird von einem Motor zur Rotation angetrieben.

Bei dem körnigen Gut, das in die Sichteinrichtung aufgegeben wird handelt es sich beispielsweise um Bestandteile von Zement, wie Klinker, Hüttensand, Silicastaub, Puzzolane, Flugasche, gebrannter Schiefer und/ oder Kalkstein.

Eine Sichteinrichtung wie voran beschrieben ermöglicht eine zuverlässige Herstellung eines Materials mit einem bestimmten Korngrößenbereich. Der Materialstrom wird vorzugweise der ersten Sichtstufe zugeführt, wobei das Feingut der ersten Sichtstufe eine bestimmte maximale Korngröße aufweist. Ein anschließendes Sichten des Feinguts der ersten Sichtstufe in der zweiten Sichtstufe führt dazu, dass das Grobgut der zweiten Sichtstufe eine bestimmte maximale und eine weitere bestimmte minimale Korngröße aufweist. Das Fertiggut, nämlich das Grobgut der zweiten Sichtstufe, weist daher ein bestimmtes insbesondere sehr enges Kornband (beispielsweise ein Mono-Korn) auf. Ein Materialstrom mit einem bestimmten Korngrößenbereich bietet den Vorteil einer besseren Homogenität des Materials, da sehr kleine und sehr große Partikelgrößen in dem Materialstrom nicht vorhanden sind. Auch weist ein solches Material bestimmte Eigenschaften auf, die sich günstig auf die die Zementeigenschaften (Mehrkomponentenzemente) auswirken. Die Mischung und Sichtung eines definierten Kornbandes aus unterschiedlichen Hauptkomponenten, wie beispielsweise Klinker, Kalkstein, Hüttensand, Flugasche, sowie Kornfraktionen (beispielsweise hochfein < 10 µm, 5 - 45 µm, 10 - 32 µm, 32 - 45 µm, grob > 45 µm) dient sowohl dazu, eine optimierte Packungsdichte des Bindemittels einzustellen als auch gezielt reaktive und inerte Komponenten vorzugeben. Beispielsweise weisen Zemente mit einem definierten Kornband eine hohe Festigkeit bei geringem Bindemitteleinsatz auf.

Der Rotorkorb der ersten Sichtstufe und der Rotorkorb der zweiten Sichtstufe sind insbesondere an einer gemeinsamen Struktur gelagert und beispielsweise direkt miteinander verbunden. Vorzugsweise sind die erste Sichtstufe und die zweite Sichtstufe in einem gemeinsamen Gehäuse angeordnet. Dies ermöglicht eine besonders kompakte Ausbildung der Sichteinrichtung und eine definierte Anordnung der Rotorkörbe zueinander.

Gemäß einer ersten Ausführungsform ist die zweite Sichtstufe unterhalb der ersten Sichtstufe angeordnet, wobei unter "unterhalb" und "oberhalb" das Höhenniveau zu verstehen ist. Erfindungsgemäß ist die zweite Sichtstufe vollständig unterhalb der ersten Sichtstufe angeordnet, wobei der Rotorkorb der ersten Sichtstufe oberhalb des Rotorkorbs der zweiten Sichtstufe angeordnet ist, sodass Material zumindest teilweise schwerkraftbedingt von der ersten Sichtstufe zur zweiten Sichtstufe gelangt.

Der Rotorkorb der ersten Sichtstufe ist gemäß einer weiteren Ausführungsform koaxial zu dem Rotorkorb der zweiten Sichtstufe angeordnet. Dies ermöglicht eine besonders kompakte Ausbildung der Sichteinrichtung mit der ersten und der zweiten Sichtstufe.

Gemäß einer weiteren Ausführungsform weist die Sichteinrichtung zumindest einen Sichtlufteinlass auf, der mit der ersten Sichtstufe verbunden ist, sodass Sichtluft von dem Sichtlufteinlass in die erste Sichtstufe strömt. Insbesondere weist die Sichteinrichtung genau einen Sichtlufteinlass auf, der auf der Höhe der ersten Sichtstufe angeordnet ist. Um den Sichtluftstrom durch die erste und die zweite Sichtstufe getrennt voneinander einstellen zu können, weist die Sichteinrichtung beispielsweise einen zweiten Sichtlufteinlass auf, der mit der zweiten Sichtstufe verbunden ist. Jeder der Sichtlufteinlässe umfasst vorzugsweise Klappen, um den Sichtluftstrom in Richtung des Rotorkorbes einzustellen.

Der Rotorkorb der ersten Sichtstufe und der Rotorkorb der zweiten Sichtstufe sind gemäß einer weiteren Ausführungsform an einer Antriebswelle angebracht. Insbesondere werden die Rotorkörbe von einer gemeinsamen Antriebwelle angetrieben. Es ist ebenfalls denkbar, dass die Sichteinrichtung beispielsweise insgesamt zwei Antriebswellen aufweist, wobei jeder Rotorkorb an jeweils einer Antriebswelle angebracht ist. Der Rotorkorb der ersten Sichtstufe und der Rotorkorb der zweiten Sichtstufe sind vorzugweise mit unterschiedlichen Rotationsgeschwindigkeiten rotierbar. Dies bietet die Möglichkeit die erste und die zweite Sichtstufe unterschiedlich zu betreiben, sodass beispielsweise unterschiedliche Trennschärfen erreicht werden.

Gemäß einer weiteren Ausführungsform ist der Feingutauslass der ersten Sichtstufe an der zweiten Sichtstufe, insbesondere an einem Materialeinlass der zweiten Sichtstufe, angebracht. Der Feingutauslass der ersten Sichtstufe ist vorzugsweise direkt an dem Materialeinlass der zweiten Sichtstufe befestigt ist. Bei dem Feingutauslass handelt es sich insbesondere um einen unterhalb des Rotorkorbes angebrachten Auffangbehälter, in den lediglich das Material fällt, das innerhalb des Rotorkorbes gelangt. Der Feingutauslass bildet vorzugsweise einen Materialeinlass in die zweite Sichtstufe. Insbesondere sind der Feingutauslass der ersten Sichtstufe und der Materialeinlass der der zweiten Sichtstufe innerhalb eines gemeinsamen Gehäuses der Sichteinrichtung angebracht, wobei die Rotorkörbe der ersten und der zweiten Sichtstufe beispielsweise an einer gemeinsamen Struktur angebracht sind. Eine direkte Befestigung des Feingutauslasses an dem Materialeinlass der zweiten Sichtstufe ermöglicht eine besonders kompakte Bauweise der Sichteinrichtung, wobei auf Materialfördereinrichtungen zwischen der ersten und der zweiten Sichtstufe verzichtet wird. Die Anordnung der ersten und der zweiten Sichtstufe innerhalb eines gemeinsamen Gehäuses ermöglicht einen einfachen Austausch der gesamten Sichteinrichtung im Verschleißfall, sowie eine einfache Installation der Sichteinrichtung.

Die zweite Sichtstufe weist gemäß einer weiteren Ausführungsform einen weiteren Materialeinlass zum Einlassen von weiterem Material zusätzlich zu dem Feingut der ersten Sichtstufe auf. Bei dem weiteren Material handelt es sich beispielsweise um Kalkstein, Flugasche, getemperte Tone, natürliche Puzzolane, Hüttensandmehl, Quarzmehl und/ oder Silicastaub. Die Zugabe einer weiteren Komponente in die zweite Sichtstufe der Sichteinrichtung bietet den Vorteil einer gleichmäßigen Vermischung des Feinguts der ersten Sichtstufe mit dem weiteren Material in der zweiten Sichtstufe, wobei einer separate Einrichtung zum Vermischen eines weiteren Materials mit dem Fertiggut der Sichteinrichtung nicht notwendig ist.

Gemäß einer weiteren Ausführungsform sind der Rotorkorb der ersten Sichtstufe und der Rotorkorb der zweiten Sichtstufe identisch ausgebildet. Dies ermöglicht eine besonders einfache und kostengünstige Konstruktion der Sichteinrichtung, wobei der erste und der zweite Rotor gegeneinander austauschbar sein können. Die Rotorkörbe der ersten und der zweiten Sichtstufe sind beispielsweise auch unterschiedlich ausgestaltet, wobei sich die Rotorkörbe der ersten und der zweiten Sichtstufe beispielsweise in Durchmesser, Höhe und/ oder Abstand der Rotorstäbe voneinander unterscheiden. Weiterhin können für die Sichtstufen unterschiedliche Betriebsparameter wie Rotorgeschwindigkeit, Sichtluftvolumenstrom und Aufgabemassenstrom eingestellt werden.

Die Sichteinrichtung weist gemäß einer weiteren Ausführungsform einen ersten Sichtlufteinlass zum Einlassen von Sichtluft in die erste Sichtstufe und einen zweiten Sichtlufteinlass zum Einlassen von Sichtluft in die zweite Sichtstufe auf. Vorzugsweise ist der zweite Sichtlufteinlass ausschließlich zum Einlassen von Sichtluft, insbesondere von außerhalb der Sichteirichtung, in die zweite Sichtstufe angeordnet, wobei die durch den zweiten Sichtlufteinlass in die Sichteinrichtung strömende Sichtluft nicht in die erste Sichtstufe gelangt. Die durch den ersten Sichtlufteinlass in die Sichteinrichtung strömende Sichtluft strömt vorzugsweise durch die erste und die zweite Sichtstufe. Die Sichtlufteinlässe bilden vorzugsweise jeweils einen Einlass zum Einlassen von Sichtluft, insbesondere Umgebungsluft in die Sichteinrichtung.

Die Erfindung umfasst des Weiteren eine Anlage zur Herstellung von Zement, Zementzusatzstoffe und/ oder Komponenten zur Betonherstellung aufweisend eine erfindungsgemäße Sichteinrichtung und eine Mahleinrichtung mit einem Materialeinlass und einem Materialauslass, wobei der Grobgutauslass der ersten Sichtstufe mit dem Materialeinlass der Mahleinrichtung verbunden ist und der Materialauslass der Mahleinrichtung mit dem Materialeinlass der Sichteinrichtung verbunden ist.

Des Weiteren umfasst die Erfindung ein Verfahren zum Sichten eines körnigen Materialstroms mit einer erfindungsgemäßen Sichteinrichtung, wobei das Verfahren gemäß Anspruch 10 die Schritte umfasst: Sichten des Materialstroms in der ersten Sichtstufe in ein Feingut und ein Grobgut und Zuführen des Feinguts der ersten Sichtstufe zu der vollständig unterhalb der ersten Sichtstufe angeordneten zweiten Sichtstufe.

Die mit Bezug auf die Sichteinrichtung beschriebenen Ausführungen und Vorteile treffen in verfahrensmäßiger Entsprechung auch auf das Verfahren zum Sichten eines körnigen Materialstroms zu.

Gemäß einer ersten Ausführungsform wird in der zweiten Sichtstufe aus dem Feingut der ersten Sichtstufe eine Feingutfraktion ausgesichtet, wobei sowohl das Feingut als auch das Grobgut der zweiten Sichtstufe das Fertiggut bilden können.

Das Grobgut der ersten Sichtstufe wird gemäß einer weiteren Ausführungsform einer Mahleinrichtung zugeführt und das in der Mahleinrichtung gemahlene Material wird dem Einlass der ersten Sichtstufe zugeführt.

Der Rotorkorb der ersten Sichtstufe rotiert gemäß einer weiteren Ausführungsform mit einer Rotationsgeschwindigkeit, die sich von der Rotationsgeschwindigkeit des Rotorkorbes der zweiten Sichtstufe unterscheidet.

Jede der Sichtstufen der Sichteinrichtung weist gemäß einer weiteren Ausführungsform jeweils einen Sichtlufteinlass auf, durch den ein Sichtluftstrom in die jeweilige Sichtstufe strömt und wobei die Strömungsgeschwindigkeiten der Sichtluftströme voneinander verschieden sind. Vorzugsweise weist die Sichteinrichtung einen ersten Sichtlufteinlass zum Einlassen von Sichtluft in die erste Sichtstufe und einen zweiten Sichtlufteinlass zum Einlassen von Sichtluft in die zweite Sichtstufe auf.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Sichteinrichtung gemäß einem Ausführungsbeispiel.
- Fig. 2: zeigt eine Anlage zur Herstellung von Zement mit einer Sichteinrichtung gemäß Fig.1 gemäß einem Ausführungsbeispiel.

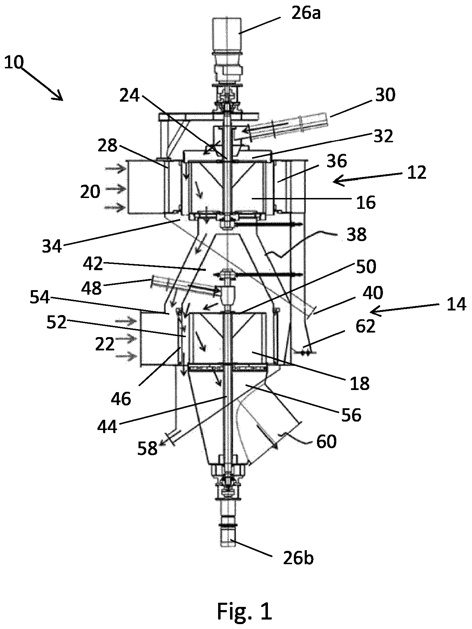

Fig. 1 zeigt eine Sichteinrichtung 10 mit einer ersten Sichtstufe 12 und einer darunter angeordneten zweiten Sichtstufe 14. Jede der Sichtstufen weist jeweils einen dynamische Sichter mit einem rotierbaren Rotorkorb 16, 18 auf. Die erste Sichtstufe 12 weist einen ersten Rotorkorb 16 auf, der um seine vertikal ausgerichtete Längsachse rotierbar angebracht ist und über eine erste Antriebswelle 24 zur Rotation angetrieben wird. Die erste Antriebswelle 24 ist mit einem oberhalb der ersten Sichtstufe angeordneten Motor 26a verbunden. Umfangsmäßig ist um den ersten Rotorkorb 16 herum eine erste Leiteinrichtung 28 mit einer Mehrzahl von Leitelementen angebracht. Radial außerhalb der Leiteirichtung 28 ist ein Sichtlufteilass 20 zum Einlassen von Sichtluft in die erste Sichtstufe 12 vorgesehen. Der Sichtlufteinlass 20 umfasst beispielsweise Klappen zum Einstellen der Sichtluft in Richtung des Rotorkorbes 16 und/ oder einen nicht dargestellten Ventilator. Oberhalb des ersten Rotorkorbes 16 ist ein Materialeinlass 30 zum Einlassen von zu sichtendem Material in die erste Sichtstufe 12 angeordnet und umfasst eine Materialrutsche und einen optionalen Streuteller 32. Der Streuteller 32 weist einen Durchmesser auf, der in etwa dem Durchmesser des ersten Rotorkorbes 16 entspricht und ist koaxial zu diesem angeordnet. Zwischen der ersten Leiteinrichtung 28 und dem ersten Rotorkorb 16 ist der erste Sichtraum 36, in den das zu sichtende Material von dem Streuteller 32 aufgegeben wird.

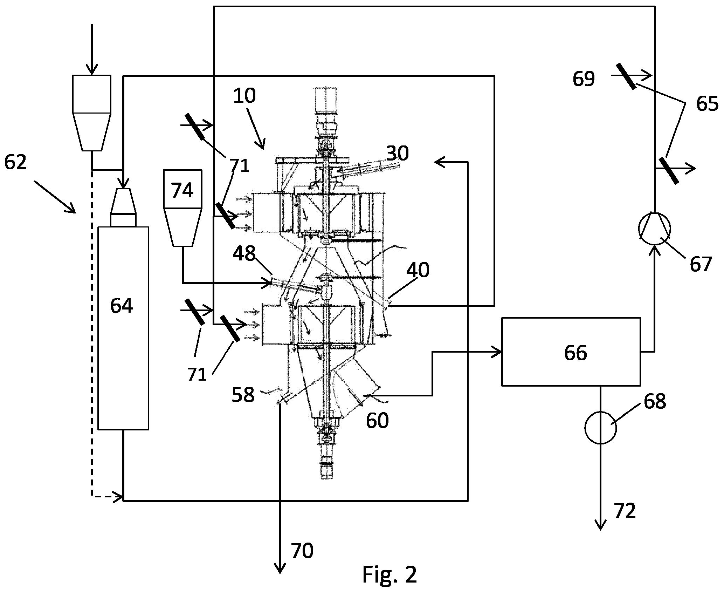

Die erste Sichtstufe 12 umfasst des Weiteren einen ersten Grobguttrichter 34, der unterhalb des ersten Rotorkorbes 16 angeordnet ist und mit dem ersten Sichtraum 36 in Verbindung steht, sodass an dem ersten Rotorkorb 16 abgewiesenes Material in den Grobguttrichter 34 fällt. An dem unteren Ende des Grobguttrichters 34 ist ein Grobgutauslass 40 angeordnet zum Auslassen des Grobguts aus der Sichteinrichtung 10. Unterhalb des ersten Rotorkorbes 16 ist ein Feingutauslass 38 angeordnet, der mit dem Inneren des ersten Rotorkorbes 16 in Verbindung steht, sodass Material von dem Inneren des ersten Rotorkorbes 16 in den Feingutauslass 38 gelangt. Der Feingutauslass 38 weist in der Fig. 2 beispielhaft im Wesentlichen die Gestalt eines Kegelstumpfes auf, wobei im Inneren des Feingutauslasses 38 eine Abdeckung 42 angebracht ist.

Unterhalb der ersten Sichtstufe 12 ist die zweite Sichtstufe 14 angeordnet und weist einen zu dem ersten Rotorkorb 16 koaxialen zweiten Rotorkorb 18 auf, der um seine vertikal ausgerichtete Längsachse rotierbar angebracht ist und über eine zweite Antriebswelle 44 zur Rotation angetrieben wird. Die zweite Antriebswelle 44 ist beispielsweise mit einem Motor 26b oder mit der ersten Antriebswelle 24 verbunden und koaxial zu der ersten Antriebswelle 24 angeordnet. Es ist ebenfalls denkbar, die Rotorkörbe 16, 18 nicht koaxial zueinander anzuordnen, wobei jeder Rotorkorb 16, 18 auf jeweils einer Antriebswelle angebracht ist, die beispielsweise mit unterschiedlichen Rotationsgeschwindigkeiten rotieren.

Umfangsmäßig ist um den zweiten Rotorkorb 18 herum eine zweite Leiteinrichtung 46 mit einer Mehrzahl von Leitelementen angebracht. Radial außerhalb der Leiteirichtung 46 ist ein zweiter Sichtlufteinlass 22 zum Einlassen von Sichtluft in die zweite Sichtstufe 14 vorgesehen. Der zweite Sichtlufteinlass 22 umfasst beispielsweise Klappen um die Sichtluft in Richtung des Rotorkorbes 18 einzustellen und/ oder einen oder mehrere Ventilatoren. Oberhalb des zweiten Rotorkorbes 18 ist ein zweiter Materialeinlass 48 zum Einlassen von zu sichtendem Material in die zweite Sichtstufe 14 angeordnet und umfasst eine Materialrutsche und einen zweiten optionalen Streuteller 50. Der zweite Streuteller 50 weist einen Durchmesser auf, der in etwa dem Durchmesser des zweiten Rotorkorbes 18 entspricht und ist koaxial zu diesem angeordnet. Die erste Antriebswelle 24 und die zweite Antriebswelle 44 sind über eine Struktur 62 miteinander verbunden und an dieser gelagert.

Zwischen der zweiten Leiteinrichtung 46 und dem zweiten Rotorkorb 18 ist der zweite Sichtraum 52, in den das zu sichtende Material von dem zweiten Streuteller 50 aufgegeben wird. Die zweite Sichtstufe 14 weist einen weiteren Materialeinlass 54 auf, der mit dem Feingutauslass 38 der ersten Sichtstufe 12 verbunden ist, sodass das Feingut der ersten Sichtstufe 12 der zweiten Sichtstufe 14 zugeführt wird. Der weitere Materialeinlass 54 zum Einlassen des Feinguts der ersten Sichtstufe 12 in die zweite Sichtstufe 14 ist an dem zweiten Sichtlufteinlass 22 und radial außerhalb der zweiten Leiteinrichtung 46 angeordnet, sodass das Feingut der ersten Sichtstufe 12 zusammen mit dem Sichtluftstrom in die zweite Sichtstufe 14 eintritt.

Die zweite Sichtstufe 14 umfasst des Weiteren einen zweiten Grobguttrichter 56, der unterhalb des zweiten Rotorkorbes 18 angeordnet ist und mit dem zweiten Sichtraum 52 in Verbindung steht, sodass an dem zweiten Rotorkorb 18 abgewiesenes Material in den zweiten Grobguttrichter 56 fällt. An dem unteren Ende des zweiten Grobguttrichters 56 ist ein zweiter Grobgutauslass 58 angeordnet zum Auslassen des Grobguts aus der Sichteinrichtung 10. Unterhalb des zweiten Rotorkorbes 18 ist ein zweiter Feingutauslass 60 angeordnet, der mit dem Inneren des zweiten Rotorkorbes 18 in Verbindung steht, sodass Material von dem Inneren des ersten Rotorkorbes 18 in den Feingutauslass 60 gelangt und die Sichteinrichtung 10 über den zweiten Feingutauslass 60 verlässt.

Im Betrieb der Sichteinrichtung 10 wird Material über den ersten Einlass 30 in die erste Sichtstufe 12 der Sichteinrichtung 10 aufgegeben und gelangt über die Materialrutsche auf den ersten Streuteller 32. Der Streuteller 32 ist fest mit der ersten Antriebswelle 24 verbunden und rotiert mit dieser, sodass auf den ersten Streuteller 32 aufgegebenes Material von dem äußeren Rand des Streutellers 32 in den ersten Sichtraum 36 aufgegeben wird. In dem ersten Sichtraum 36 wird das Material von dem in Richtung des Rotorkorbes 16 strömenden Sichtluftstrom erfasst und an den Rotorstäben des ersten Rotorkorbes 16 in zwei Kornfraktionen getrennt. Das an den Rotorstäben des ersten Rotorkorbes 16 ausgesichtete Grobgut einer Kornfraktion von beispielsweise 32 - 500 µm gelangt von dem Sichtraum 36 in den Grobguttrichter 34 und wird anschließend über den Grobgutauslass aus der Sichteinrichtung 10 ausgelassen. Das Feingut mit einer Korngröße von beispielsweise kleiner als 45 µm gelangt in das Innere des ersten Rotorkorbes 16 und anschließend in den ersten Feingutauslass 38. An den ersten Feingutauslass 38 schließt sich unmittelbar die zweite Sichtstufe 14 und, wobei das Feingut zusammen mit dem zweiten Sichtluftstrom in die zweite Sichtstufe 14 aufgegeben wird. Der Feingutauslass 38 der ersten Sichtstufe 12 und Materialeinlass 54 der der zweiten Sichtstufe 14 sind insbesondere innerhalb eines gemeinsamen Gehäuses der Sichteinrichtung 10 angebracht. Das in das Innere des zweiten Rotorkorbes 18 gelangte Feingut, beispielsweise kleiner 10 µm, gelangt in den zweiten Feingutauslass 60, wobei das in dem zweiten Sichtraum 52 ausgesichtete Grobgut, beispielsweise 5 - 45 µm, in den Grobguttrichter 56 gelangt und die Sichteinrichtung 10 über den zweiten Grobgutauslass 58 verlässt. Bei dem Grobgut der zweiten Sichtstufe 14 handelt es sich beispielsweise um das Fertiggut, dass zur Zementherstellung verwendet wird. Für die Sichtstufen können unterschiedliche Trennschnitte eingestellt werden. Die unterschiedlichen entstehenden Stoffströme der Fertiggüter 70 und 72 können direkt weiter verarbeitet werden oder in entsprechenden Lagereinrichtungen gespeichert werden.

Es ist auch denkbar, in der Sichteinrichtung 10 lediglich einen, den ersten Sichtlufteinlass 20, vorzusehen, wobei die Sichtluftzufuhr zu der zweiten Sichtstufe 14 über den Feingutauslass 38 der ersten Sichtstufe 12 erfolgt. Bei der Ausführung der Sichteinrichtung 10 mit zwei Sichtlufteinlässen 20, 22 ist es ebenfalls denkbar, das Grobgut der ersten Sichtstufe 12 auf den zweiten Streuteller der zweiten Sichtstufe 14 aufzugeben. Der erste und der zweite Rotorkorb sind insbesondere identisch und werden mit unterschiedlichen Rotationsgeschwindigkeiten betrieben. Vorzugsweise sind die Strömungsgeschwindigkeiten der Sichtluftströme des ersten Sichtlufteinlasses 20 und des zweiten Sichtlufteinlasses 22 voneinander verschieden.

Die voran beschriebene Sichteinrichtung 10 bietet die Möglichkeit, zuverlässig einen Materialstrom mit einem bestimmten Korngrößenbereich zu erhalten. Durch das Sichten des Materialstroms in der ersten Sichtstufe 12 weist das Feingut eine bestimmte maximale Korngröße auf. Ein anschließendes Sichten des Feinguts der ersten Sichtstufe 12 in der zweiten Sichtstufe 14 führt dazu, dass das Grobgut der zweiten Sichtstufe eine bestimmte maximale und eine weitere bestimmte minimale Korngröße aufweist. Das Fertiggut, nämlich das Grobgut der zweiten Sichtstufe, weist daher einen bestimmten Korngrößenbereich auf. Ein Materialstrom mit einem bestimmten Korngrößenbereich bietet den Vorteil einer besseren Durchmischung des Materials, da sehr kleine und sehr große Partikelgrößen in dem Materialstrom nicht vorhanden sind. Auch weist ein solches Material bestimmte Eigenschaften auf, die sich günstig auf den Zementherstellungsprozess auswirken. Beispielsweise ist sowohl das Kleinst- als auch das Größtkorn des Kornbandes einstellbar. Die Sichteinrichtung bietet des Weiteren den Vorteil einer kompakten Bauweise.

Fig. 2 zeigt einen Ausschnitt einer Anlage 62 zur Herstellung von Zement, Zementzusatzstoffe und / oder Komponenten zur Betonherstellung mit einer Sichteinrichtung 10 gemäß Fig. 1. Beispielsweise zeigt Fig. 2 eine Abzweigung eines Materialstroms von einer Hauptmahlanlage, wie einer Walzenmühle, einer Kugelmühle oder einer Vertikalrollenmühle. Die Anlage 62 umfasst eine Mahleinrichtung 64, wie eine Kugelmühle, insbesondere eine Rührwerkskugelmühle, der ein Materialstrom zugeführt wird. Die Mahleinrichtung 64 ist mit dem Einlass 30 der ersten Sichtstufe 12 der Sichteinrichtung verbunden, sodass Material im Anschluss an die Mahleinrichtung 64 in die erste Sichtstufe 14 gelangt. Der erste Grobgutauslass 40 der ersten Sichtstufe 12 ist mit dem Einlass der Mahleinrichtung 64 verbunden, sodass das in der ersten Sichtstufe 12 ausgesichtete Grobgut der Mahleinrichtung 64 zugeführt wird. Es ist auch denkbar, die Anlage 62 ohne Mahleinrichtung 64 auszuführen und das Grobgut der ersten Sichtstufe 12 der Hauptmahlanlage zum erneuten Mahlen zuzuführen. Der zweiten Sichtstufe 14 wird weiteres Material 74 über den weiteren Materialeinlass 48 zusätzlich zu dem Feingut der ersten Sichtstufe 12 zugeführt und innerhalb der zweiten Sichtstufe 14 mit dem Feingut der ersten Sichtstufe 12 vermischt. Beispielsweise wird als weiteres Material 74, insbesondere ein leicht mahlbares bzw. separat zu dem Materialstrom der ersten Sichtstufe 12 gemahlenes Material, wie Kalkstein, in die zweite Sichtstufe 14 aufgegeben.

An den Feingutauslass 60 der zweiten Sichtstufe 14 schließt sich ein Abscheider 66 an, in dem das Feingut von dem Sichtluftstrom getrennt wird. Das Feingut 72 der zweiten Sichtstufe wird über eine Schleuse 68 abgeführt, wobei die Abluft über einen Ventilator 67 beispielhaft dem Sichtlufteinlass der ersten 12 und der zweiten Sichtstufe 14 zugeführt wird. Der Sichtluftvolumenstrom wird über eine Sichtluftleitung der ersten 12 und der zweiten Sichtstufe 14 zugeführt, die beispielhaft eine oder mehrere Klappen 65 zum Einstellen und Verteilen des Sichtluftstroms aufweist. Vorzugsweise ist ein Heißgaserzeuger 69 mit der Sichtluftleitung verbunden, um den Sichtluftvolumenstrom zu erwärmen. Des Weiteren weist die Sichtluftleitung eine oder mehrere Klappen 71 zum Einlassen von Frischluft in die Sichtluftleitung auf. Das Grobgut der zweiten Sichtstufe 14 wird als Fertiggut 70 beispielsweise in weiteren nicht dargestellten Anlagenkomponenten zu Zement verarbeitet. Auch bei dem Feingut 72 der zweiten Sichtstufe kann es sich beispielweise um Fertiggut handeln, das in einem weiteren Schritt zu Zement verarbeitet wird. Als Beispiel kann das Fertiggut (70) eine Feinheit von 4000 cm²/g nach Blaine aufweisen, wobei das Feingut 72 der zweiten Sichtstufe eine Feinheit von etwa 10000 cm²/g nach Blaine aufweist.

### Bezugszeichenliste

- 10: Sichteinrichtung
- 12: erste Sichtstufe
- 14: zweite Sichtstufe
- 16: erster Rotorkorb
- 18: zweiter Rotorkorb
- 20: erster Sichtlufteinlass
- 22: zweiter Sichtlufteinlass
- 24: erste Antriebswelle
- 26 a/b: Motor
- 28: erste Leiteinrichtung
- 30: Materialeinlass der ersten Sichtstufe
- 32: erster Streuteller
- 34: erster Grobguttrichter
- 36: erster Sichtraum
- 38: Feingutauslass
- 40: Grobgutauslass
- 42: Abdeckung
- 44: zweite Antriebswelle
- 46: zweite Leiteinrichtung
- 48: weiterer Materialeinlass der zweiten Sichtstufe
- 50: zweiter Streuteller
- 52: zweiter Sichtraum
- 54: Materialeinlass der zweiten Sichtstufe
- 56: zweiter Grobguttrichter
- 58: zweiter Grobgutauslass
- 60: zweiter Feingutauslass
- 62: Anlage zur Herstellung von Zement
- 64: Mahleinrichtung
- 65: Klappen zum Einstellen und Verteilen des Sichtluftvolumenstroms
- 66: Abscheider
- 67: Ventilator für den Sichtluftvolumenstrom
- 68: Schleuse
- 69: Heißgaserzeuger
- 70: Fertiggut
- 71: Klappen zum Einlassen von Frischluft, sowie Einstellen und Verteilen des Sichtluftvolumenstroms
- 72: Fertiggut
- 74: weiteres Material

## Patentansprüche

1. Sichteinrichtung (10) zum Sichten und/ oder Homogenisieren eines körnigen Materialstroms aufweisend eine erste Sichtstufe (12) und eine zweite Sichtstufe (14), wobei jede Sichtstufe (12, 14) jeweils einen Materialeinlass (30, 54) zum Einlassen von Sichtgut in die jeweilige Sichtstufe (12, 14), einen Grobgutauslass (40, 58) zum Auslassen des Grobguts aus der jeweiligen Sichtstufe (12, 14) und einen Feingutauslass (38, 60) zum Auslassen des Feinguts aus der jeweiligen Sichtstufe (12, 14) aufweist,
**dadurch gekennzeichnet, dass** jede Sichtstufe (12, 14) jeweils einen um seine vertikal ausgerichtete Längsachse rotierbaren Rotorkorb (16, 18) aufweist, wobei J der Feingutauslass (38) der ersten Sichtstufe (12) mit der zweiten Sichtstufe (14) in Verbindung steht, sodass Feingut der ersten Sichtstufe (12) der zweiten Sichtstufe (14) zuführbar ist, wobei die zweite Sichtstufe (14) vollständig unterhalb der ersten Sichtstufe (12) angeordnet ist.

2. Sichteinrichtung (10) nach einem der vorangehenden Ansprüche, wobei der Rotorkorb (16) der ersten Sichtstufe (12) koaxial zu dem Rotorkorb (18) der zweiten Sichtstufe (14) angeordnet ist.

3. Sichteinrichtung (10) nach einem der vorangehenden Ansprüche, wobei die Sichteinrichtung (10) zumindest einen Sichtlufteinlass (20, 22) aufweist, der mit der ersten Sichtstufe (12) verbunden ist, sodass Sichtluft von dem Sichtlufteinlass (20, 22) in die erste Sichtstufe (12) strömt.

4. Sichteinrichtung (10) nach einem der vorangehenden Ansprüche, wobei der Rotorkorb (16) der ersten Sichtstufe (12) und der Rotorkorb (18) der zweiten Sichtstufe (14) an einer gemeinsamen Antriebswelle (24, 44) angebracht sind.

5. Sichteinrichtung (10) nach einem der vorangehenden Ansprüche, wobei der Feingutauslass (38) der ersten Sichtstufe (12) an der zweiten Sichtstufe (14), insbesondere an einem Materialeinlass (54) der zweiten Sichtstufe (14), angebracht ist.

6. Sichteinrichtung (10) nach einem der vorangehenden Ansprüche, wobei die zweite Sichtstufe (14) einen weiteren Materialeinlass (48) zum Einlassen von weiterem Material aufweist.

7. Sichteinrichtung (10) nach einem der vorangehenden Ansprüche, wobei der Rotorkorb (16) der ersten Sichtstufe (12) und der Rotorkorb (18) der zweiten Sichtstufe (14) identisch ausgebildet sind.

8. Sichteinrichtung (10) nach einem der vorangehenden Ansprüche, wobei die Sichteinrichtung (10) einen ersten Sichtlufteinlass (20) zum Einlassen von Sichtluft in die erste Sichtstufe (12) und einen zweiten Sichtlufteinlass (22) zum Einlassen von Sichtluft in die zweite Sichtstufe (14) aufweist.

9. Anlage zur Herstellung von Zement aufweisend eine Sichteinrichtung (10) nach einem der vorangehenden Ansprüche und eine Mahleinrichtung (64) mit einem Materialeinlass und einem Materialauslass, wobei der Grobgutauslass (40) der ersten Sichtstufe (12) mit dem Materialeinlass der Mahleinrichtung (64) verbunden ist und der Materialauslass der Mahleinrichtung mit dem Materialeinlass (30) der Sichteinrichtung (10) verbunden ist.

10. Verfahren zum Sichten eines körnigen Materialstroms mit einer Sichteinrichtung (10) nach einem der Ansprüche 1 bis 8, wobei das Verfahren die Schritte umfasst,
Sichten des Materialstroms in der ersten Sichtstufe (12) in ein Feingut und ein Grobgut und
Zuführen des Feinguts der ersten Sichtstufe (12) zu der vollständig unterhalb der ersten Sichtstufe (12) angeordneten zweiten Sichtstufe (14).

11. Verfahren nach Anspruch 10, wobei in der zweiten Sichtstufe (14) aus dem Feingut der ersten Sichtstufe (12) eine Feingutfraktion ausgesichtet wird und das Grobgut der zweiten Sichtstufe (14) das Fertiggut bildet.

12. Verfahren nach Anspruch 10 oder 11, wobei das Grobgut der ersten Sichtstufe (12) einer Mahleinrichtung (64) zugeführt wird und das in der Mahleinrichtung (64) gemahlene Material dem Einlass (30) der ersten Sichtstufe (12) zugeführt wird.

13. Verfahren nach einem der Ansprüche 10 bis 12, wobei der Rotorkorb (16) der ersten Sichtstufe (12) mit einer Rotationsgeschwindigkeit rotiert, die sich von der Rotationsgeschwindigkeit des Rotorkorbes (18) der zweiten Sichtstufe (14) unterscheidet.

14. Verfahren nach einem der Ansprüche 10 bis 13, wobei jede der Sichtstufen (12, 14) der Sichteinrichtung (10) jeweils einen Sichtlufteinlass (20, 22) aufweist durch den ein Sichtluftstrom in die jeweilige Sichtstufe (12, 14) strömt und wobei die Strömungsgeschwindigkeit der Sichtluftströme voneinander verschieden sind.

## Claims

1. Classifying apparatus (10) for classifying and/or homogenizing a granular material flow, comprising a first classifying stage (12) and a second classifying stage (14), wherein each classifying stage (12, 14) has a respective material inlet (30, 54) for admitting material to be classified into the respective classifying stage (12, 14), a coarse-material outlet (40, 58) for discharging coarse material from the respective classifying stage (12, 14), and a fine-material outlet (38, 60) for discharging the fine material from the respective classifying stage (12, 14),
**characterized in that**
each classifying stage (12, 14) has a respective rotary cage (16, 18), which can be rotated about its vertically aligned longitudinal axis, wherein the fine-material outlet (38) of the first classifying stage (12) is connected to the second classifying stage (14), with the result that fine material of the first classifying stage (12) can be fed to the second classifying stage (14), wherein the second classifying stage (14) is arranged completely below the first classifying stage (12).

2. Classifying apparatus (10) according to one of the preceding claims, wherein the rotary cage (16) of the first classifying stage (12) is arranged coaxially with respect to the rotary basket (18) of the second classifying stage (14).

3. Classifying apparatus (10) according to one of the preceding claims, wherein the classifying apparatus (10) has at least one classifying-air inlet (20, 22), which is connected to the first classifying stage (12), with the result that classifying air flows from the classifying-air inlet (20, 22) into the first classifying stage (12).

4. Classifying apparatus (10) according to one of the preceding claims, wherein the rotary cage (16) of the first classifying stage (12) and the rotary cage (18) of the second classifying stage (14) are attached to a common drive shaft (24, 44).

5. Classifying apparatus (10) according to one of the preceding claims, wherein the fine-material outlet (38) of the first classifying stage (12) is attached to the second classifying stage (14), in particular to a material inlet (54) of the second classifying stage (14).

6. Classifying apparatus (10) according to one of the preceding claims, wherein the second classifying stage (14) has a further material inlet (48) for admitting further material.

7. Classifying apparatus (10) according to one of the preceding claims, wherein the rotary cage (16) of the first classifying stage (12) and the rotary cage (18) of the second classifying stage (14) have identical forms.

8. Classifying apparatus (10) according to one of the preceding claims, wherein the classifying apparatus (10) has a first classifying-air inlet (20) for admitting classifying air into the first classifying stage (12) and a second classifying-air inlet (22) for admitting classifying air into the second classifying stage (14).

9. Plant for producing cement, having a classifying apparatus (10) according to one of the preceding claims and a grinding apparatus (64) with a material inlet and a material outlet, wherein the coarse-material outlet (40) of the first classifying stage (12) is connected to the material inlet of the grinding apparatus (64) and the material outlet of the grinding apparatus is connected to the material inlet (30) of the classifying apparatus (10).

10. Method for classifying a granular material flow by means of a classifying apparatus (10) according to one of Claims 1 to 8, wherein the method comprises the following steps:
classifying the material flow in the first classifying stage (12) into a fine material and a coarse material, and
feeding the fine material of the first classifying stage (12) to the second classifying stage (14), which is arranged completely below the first classifying stage (12).

11. Method according to Claim 10, wherein, in the second classifying stage (14), a fine-material fraction is classified out of the fine material of the first classifying stage (12) and the coarse material of the second classifying stage (14) forms the finished material.

12. Method according to Claim 10 or 11, wherein the coarse material of the first classifying stage (12) is fed to a grinding apparatus (64) and the material ground in the grinding apparatus (64) is fed to the inlet (30) of the first classifying stage (12).

13. Method according to one of Claims 10 to 12, wherein the rotary cage (16) of the first classifying stage (12) rotates at a rotational speed which differs from the rotational speed of the rotary cage (18) of the second classifying stage (14).

14. Method according to one of Claims 10 to 13, wherein each of the classifying stages (12, 14) of the classifying apparatus (10) has a respective classifying-air inlet (20, 22), through which a classifying-air flow flows into the respective classifying stage (12, 14), and wherein the flow velocity of the classifying-air flows are different from one another.

## Revendications

1. Dispositif de séparation (10) servant à séparer et/ou homogénéiser un flux de matière granuleux, comprenant
un premier étage de séparation (12) et un deuxième étage de séparation (14), chaque étage de séparation (12, 14) comprenant respectivement une entrée de matière (30, 54) pour l'entrée de produit à séparer dans l'étage de séparation (12, 14) respectif, une sortie de produit grossier (40, 58) pour la sortie du produit grossier hors de l'étage de séparation (12, 14) respectif et une sortie de produit fin (38, 60) pour la sortie du produit fin hors de l'étage de séparation (12, 14) respectif,
**caractérisé en ce que**
chaque étage de séparation (12, 14) comprend respectivement une cage de rotor (16, 18) pouvant tourner autour de son axe longitudinal orienté verticalement, la sortie de produit fin (38) du premier étage de séparation (12) étant en liaison avec le deuxième étage de séparation (14), de sorte que le produit fin du premier étage de séparation (12) peut être acheminé au deuxième étage de séparation (14), le deuxième étage de séparation (14) étant disposé complètement en dessous du premier étage de séparation (12).

2. Dispositif de séparation (10) selon l'une des revendications précédentes, la cage de rotor (16) du premier étage de séparation (12) étant disposée coaxialement à la cage de rotor (18) du deuxième étage de séparation (14).

3. Dispositif de séparation (10) selon l'une des revendications précédentes, le dispositif de séparation (10) comprenant au moins une entrée d'air de séparation (20, 22) qui est reliée au premier étage de séparation (12), de telle sorte que de l'air de séparation s'écoule à partir de l'entrée d'air de séparation (20, 22) jusque dans le premier étage de séparation (12).

4. Dispositif de séparation (10) selon l'une des revendications précédentes, la cage de rotor (16) du premier étage de séparation (12) et la cage de rotor (18) du deuxième étage de séparation (14) étant montées sur un arbre d'entraînement (24, 44) commun.

5. Dispositif de séparation (10) selon l'une des revendications précédentes, la sortie de produit fin (38) du premier étage de séparation (12) étant montée sur le deuxième étage de séparation (14), en particulier sur une entrée de matière (54) du deuxième étage de séparation (14) .

6. Dispositif de séparation (10) selon l'une des revendications précédentes, le deuxième étage de séparation (14) comprenant une autre entrée de matière (48) pour l'entrée d'une autre matière.

7. Dispositif de séparation (10) selon l'une des revendications précédentes, la cage de rotor (16) du premier étage de séparation (12) et la cage de rotor (18) du deuxième étage de séparation (14) étant réalisées de manière identique.

8. Dispositif de séparation (10) selon l'une des revendications précédentes, le dispositif de séparation (10) comprenant une première entrée d'air de séparation (20) pour l'entrée d'air de séparation dans le premier étage de séparation (12) et une deuxième entrée d'air de séparation (22) pour l'entrée d'air de séparation dans le deuxième étage de séparation (14).

9. Installation de production de ciment comprenant un dispositif de séparation (10) selon l'une des revendications précédentes et un dispositif de broyage (64) doté d'une entrée de matière et d'une sortie de matière, la sortie de produit grossier (40) du premier étage de séparation (12) étant reliée à l'entrée de matière du dispositif de broyage (64) et la sortie de matière du dispositif de broyage étant reliée à l'entrée de matière (30) du dispositif de séparation (10).

10. Procédé de séparation d'un flux de matière granuleux à l'aide d'un dispositif de séparation (10) selon l'une des revendications 1 à 8, le procédé comportant les étapes
de séparation du flux de matière dans le premier étage de séparation (12) en un produit fin et un produit grossier
et
d'acheminement du produit fin du premier étage de séparation (12) jusqu'au deuxième étage de séparation (14) disposé complètement en dessous du premier étage de séparation (12).

11. Procédé selon la revendication 10, une fraction de produit fin étant séparée du produit fin du premier étage de séparation (12) dans le deuxième étage de séparation (14) et le produit grossier du deuxième étage de séparation (14) formant le produit fini.

12. Procédé selon la revendication 10 ou 11, le produit grossier du premier étage de séparation (12) étant acheminé jusqu'à un dispositif de broyage (64) et la matière broyée dans le dispositif de broyage (64) étant acheminée jusqu'à l'entrée (30) du premier étage de séparation (12).

13. Procédé selon l'une des revendications 10 à 12, la cage de rotor (16) du premier étage de séparation (12) étant mise en rotation à une vitesse de rotation qui est différente de la vitesse de rotation de la cage de rotor (18) du deuxième étage de séparation (14).

14. Procédé selon l'une des revendications 10 à 13, chacun des étages de séparation (12, 14) du dispositif de séparation (10) comprenant respectivement une entrée d'air de séparation (20, 22) à travers laquelle s'écoule un flux d'air de séparation dans l'étage de séparation (12, 14) respectif et les vitesses d'écoulement des flux d'air de séparation étant différentes l'une de l'autre.
